# EUROPÄISCHE PATENTSCHRIFT

(11) **EP 2 038 136 B1**
(45) Veröffentlichungstag und Bekanntmachung des Hinweises auf die Patenterteilung: **23.02.2011**
(21) Anmeldenummer: 07725964.6
(22) Anmeldetag: 12.06.2007
(51) Int. Cl.: B60K 15/03

(54) **KRAFTSTOFFBEHÄLTER**
FUEL TANK
RESERVOIR DE CARBURANT

(30) Priorität: 07.07.2006 DE 102006031903
(43) Veröffentlichungstag der Anmeldung: 25.03.2009
(73) Patentinhaber: Kautex Textron GmbH & Co. KG., 53229 Bonn (DE)
(72) Erfinder: BORCHERT, Matthias, 53179 Bonn (DE); EULITZ, Dirk, 53113 Bonn (DE); WOLTER, Gerd, 53693 Königswinter (DE); KRÄMER, Timo, 57635 Hirz-Maulsbach (DE); LORENZ, Harald, 53474 Bad Neuenahr-Ahrweiler (DE)
(74) Vertreter: Polypatent
(86) Internationale Anmeldenummer: PCT/EP2007/005151
(87) Internationale Veröffentlichungsnummer: WO 2008/003386

(56) Entgegenhaltungen:
- EP-A1- 1 510 391
- GB-A- 2 390 582
- US-B1- 6 179 145

## Beschreibung

Die Erfindung betrifft einen Kraftstoffbehälter aus thermoplastischem Kunststoff mit wenigstens einer umlaufenden, als Schweiß- oder Quetschnaht ausgebildeten Naht, mit wenigstens einer Einfüllöffnung, mit Mitteln zur Be- und Entlüftung und mit Mitteln zur Förderung und Entnahme von Kraftstoff zu einer Brennkraftmaschine eines Kfz, wobei der Kraftstoffbehälter wenigstens eine Durchführung für aus diesem herauszuführende Leitungen aufweist, wobei die Durchführung die Naht des Behälters durchsetzt.

Solche Behälter werden entweder durch Extrusionsblasen oder durch Verschweißen von spritzgegossenen oder tiefgezogenen Halbschalen hergestellt. Kunststoffbehälter für Kraftstoffe werden in der Regel aus mehrschichtigen Kunststoffextrudaten hergestellt, die mit Barriereschichten für Kohlenwasserstoffe versehen sind, da Polyolefine oder ähnliche thermoplastische Kunststoffe bei Anwesenheit von Kohlenwasserstoffen quellen und/oder für diese permeabel sind.

Aus Umweltschutzgesichtspunkten ist es wünschenswert, Kraftstoffbehälter so dicht wie möglich zu bekommen, d. h. Kohlenwasserstoffemissionen weitestgehend zu verhindern. Schwachstellen solcher Behälter stellen nach wie vor Nähte und Öffnungen mit Anschlussnippeln, Ventilen oder dergleichen dar. Neben einer Einfüllöffnung müssen an einem Kraftstoffbehälter noch Entlüftungs- und Entnahmeöffnungen sowie Durchführungen für elektrische Leitungen vorgesehen sein. Schließlich ist es erforderlich, die im Kraftstoffbehälter angeordneten Aggregate, wie beispielsweise die Kraftstoffpumpe, mit elektrischer Energie zu versorgen.

Hierfür erforderliche Durchführungen im Behälter stellen potentielle Leckagestellen für Kohlenwasserstoffe dar. Grundsätzlich ist es wünschenswert, solche potentiellen Leckagestellen weitestgehend zu vermeiden.

Ein Kraftstoffbehälter mit den Merkmalen des Oberbegriffs des Anspruchs 1, zur Kraftstoffversorgung eines wasserstoffbetriebenen KFZ ist aus der EP 1 510 391 A1 bekannt. Eine Variante dieses Kraftstoffbehälters umfasst innerhalb des Kraftstoffbehälters ein zweites Speichervolumen aus einem flexiblen Innenvolumen. Der flexible Behälter kann sich zulasten des Primärvolumens des Kraftstoffbehälters ausdehnen, wenn letzterer entleert wird. Nach einem Ausführungsbeispiel ist der Innenbehälter als Folienbeutel ausgebildet, der an eine Entleerungsleitung angeschlossen ist, welche durch die Wandung des Behälters im Bereich eines umlaufenden Flansches durch diesen hindurch geführt ist.

Aus dem Dokument GB 2390582A ist ein mehrlagiger Kunststoffkraftstoffbehälter bekannt, in dessen Behälterwandung verschiedene Durchführungen für Entlüftungsleitungen sowie für einen Einfüllstutzen vorgesehen sind.

Der Erfindung liegt daher die Aufgabe zugrunde, einen Kraftstoffbehälter aus thermoplastischem Kunststoff bereitzustellen, bei welchem die Anzahl der benötigten Durchführungen durch die Behälterwandung auf ein Minimum beschränkt ist.

Die Aufgabe wird mit einem Kraftstoffbehälter der eingangs genannten Art gelöst, der sich dadurch auszeichnet, dass die Durchführung innerhalb eines die Naht durchsetzenden Einlegeteils oder Einsatzes ausgebildet ist.

Die Erfindung kann dahingehend zusammengefasst werden, dass die erforderlichen Durchführungen für Entnahme von Kraftstoff und Entlüftungsbehälters sowie für elektrische Leitungen in einem Bereich des Behälters angeordnet sind, der eine potentielle Leckagestelle darstellen kann und der sich herstellungsbedingt nicht vermeiden lässt. Bei Herstellung des Kraftstoffbehälters durch Extrusionsblasformen eines schlauchförmigen Vorformlings besitzt der Behälter eine umlaufende Quetschnaht im Bereich der Teilung der Werkzeughälften. Wird der Kraftstoffbehälter aus tiefgezogenen oder spritzgegossenen Halbschalen gefertigt, ergibt sich eine umlaufende Schweißnaht an einem flanschartig ausgebildeten umlaufenden Randbereich des Behälters. Schließlich kann der Kraftstoffbehälter gemäß der Erfindung auch aus bahn- oder bänderförmigen Extrudaten blasgeformt sein, wodurch sich ebenfalls eine umlaufende Nahtstelle ergibt.

Vorzugsweise besteht die Wandung des Behälters aus einem mehrschichtigen Extrudat mit wenigstens einer Barriereschicht für Kohlenwasserstoffe. Hier bietet sich beispielsweise EVOH (Ethylen-Vinyl-Alkohol-Copolymer) als Barrierematerial an.

Bei einer bevorzugten Ausführungsform des Kraftstoffbehälters gemäß der Erfindung ist vorgesehen, dass dieser wenigstens aus zwei Schalen zusammengesetzt ist, die jeweils im Bereich der Naht einen flanschartigen Rand ausbilden.

Die Durchführung kann sich quer zum Verlauf der Naht und in der Teilungsebene der Schalen erstrecken.

Das Einlegeteil kann zumindest teilweise aus Kunststoff bestehen und mit dem Kunststoff des Behälters in der Naht verschweißt sein. Dieses Einlegeteil kann beispielsweise bei Herstellung des Kraftstoffbehälters durch Extrusionsblasformen mehrerer bahnförmiger Vorformlinge in einem Zwischenschritt mittels eines Manipulators oder dergleichen in das plastische Zwischenerzeugnis eingebracht worden sein. Bei der endgültigen Ausformung des fertigen Behälters wird das Einlegeteil dann bei der Bildung mit dem Material der Wandung im Bereich der Naht verschweißt.

Das Einlegeteil kann also bei der Verbindung der Schalen des Behälters zwischen die umlaufenden Ränder eingelegt und mit diesen verschweißt worden sein.

Der Steckverbinder kann mehrere Durchführungen bilden. Beispielsweise kann der Steckverbinder sowohl Durchführungen für Entnahme- und Entlüftungsleitungen ausbilden als auch Mittel zur elektrischen Kontaktierung aufweisen.

Auf der Innenseite des Behälters können alle Leitungen bereits an dem Steckverbinder montiert sein.

Die Erfindung wird nachstehend anhand eines in den Zeichnungen dargestellten Ausführungsbeispiels erläutert.

Es zeigen:
- Figur 1:: eine schematische Ansicht eines Kraftstoffbehälters gemäß der Erfindung,

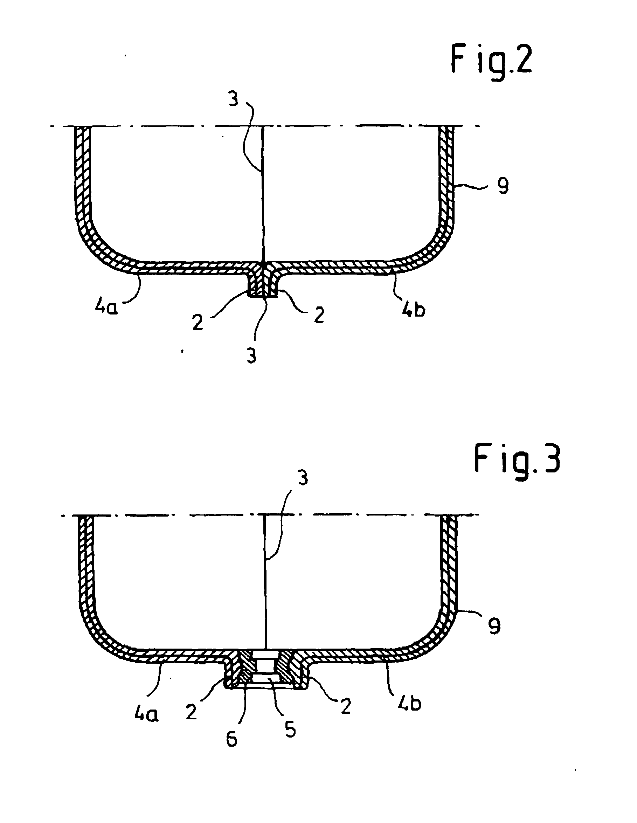

- Figur 2:: eine Schnittansicht entlang der Linien II-II in Figur 1,
- Figur 3:: eine Schnittansicht entlang der Linien III-III in Figur 1,

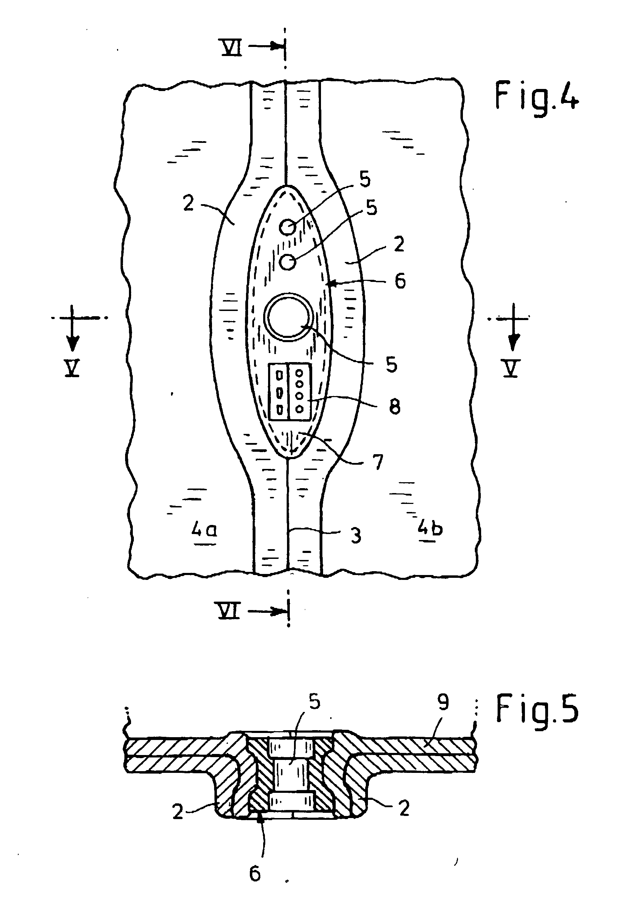

- Figur 4:: eine vergrößerte Detailansicht der hier in Rede stehenden Durchführung durch den Kraftstoffbehälter,
- Figur 5:: eine Schnittansicht entlang der Linien V-V in Figur 4 und
- Figur 6:: eine Schnittansicht entlang der Linien VI-VI in Figur 4.

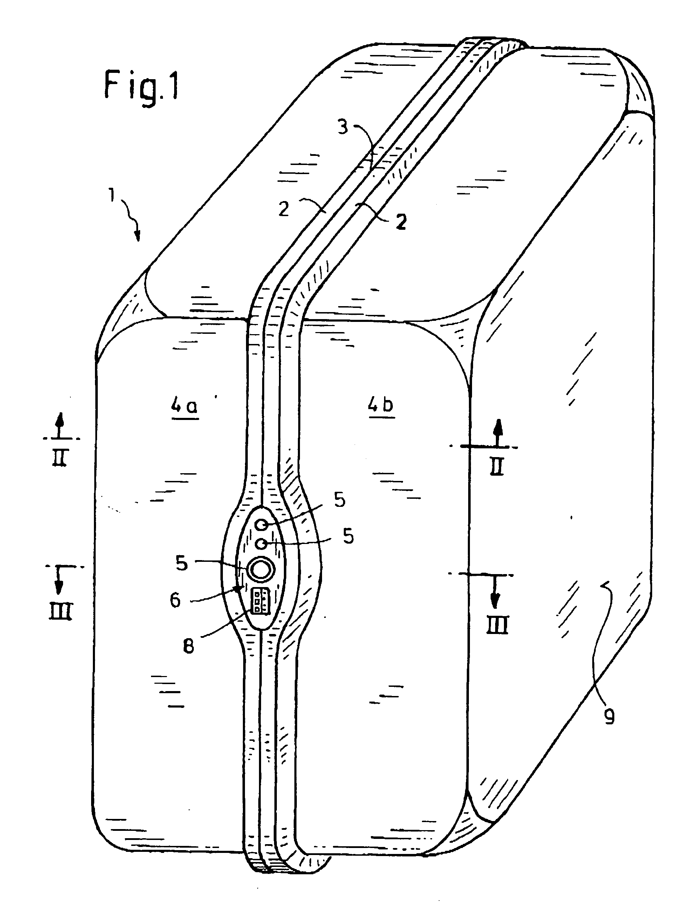

In Figur 1 ist der Kraftstoffbehälter 1 gemäß der Erfindung stark vereinfacht dargestellt. Dieser wurde durch Extrusionsblasformen von zwei bahnförmigen Extrudaten in einem mehrstufigen Formgebungsprozess hergestellt, und zwar unter Verwendung eines dreiteiligen Werkzeugs mit zwei Außenformen und einer Mittelform. Dabei wurden zunächst zwei bahnförmige Extrudate in der ersten Hitze, d. h. in noch plastischem Zustand und ohne weitere Erwärmung zwischen den Außenformen und der Mittelform platziert. Die Außenformen weisen jeweils Teilkavitäten auf, die der späteren Außenkontur des fertigen Kraftstoffbehälters entsprechen. In einem ersten Schritt werden die Außenformen gegen die Mittelformen geschlossen, wobei jeweils die Vorformlinge zwischen den Außenformen und der Mittelform angeordnet sind. Sodann werden die Vorformlinge innerhalb der Form aufgeweitet und an die Innenflächen der Teilkavitäten der Außenformen angelegt. Über in der Mittelform angeordnete Bauteilhalter oder dergleichen werden innerhalb der so gefertigten Halbschalen des Behälters Einlegeteile angeordnet. Das nachstehend noch zu beschreibende, die Durchführungen aufweisende Einlegeteil kann dabei während der ersten Formgebungsstufe der Halbschalen im Bereich der flanschartig ausgebildeten Ränder derselben platziert worden sein. Sodann werden die Außenformen auseinandergefahren, die Mittelform wird zwischen den Außenformen weggefahren und die Außenformen werden gegeneinander gefahren, sodass die Halbschalen des Kraftstoffbehälters im Bereich ihrer flanschartig umlaufenden Ränder miteinander verschweißen.

Die Halbschalen des Kraftstoffbehälters 1 sind aus einem sechsschichtigen Co-Extrudat mit einer in dieses eingebetteten Barriereschicht für Kohlenwasserstoffe ausgebildet.

Wie dies aus Figur 1 ersichtlich ist, besitzt der Kraftstoffbehälter 1 eine umlaufende Naht 3, an der die flanschartig ausgebildeten Ränder 2 der Halbschalen 4a, 4b des Kraftstoffbehälters 1 miteinander verschweißt sind. Der Kraftstoffbehälter 1 ist weiterhin mit einem üblichen Einfüllrohr versehen, welches aus Vereinfachungsgründen in den Figuren nicht dargestellt ist.

Darüber hinaus ist der Kraftstoffbehälter 1 betreffend seine Geometrie stark vereinfacht. Es ist für den Fachmann selbstverständlich, dass der Kraftstoffbehälter 1 eine verhältnismäßig zerklüftete und komplexe Außenstruktur aufweisen kann.

An dem Kraftstoffbehälter 1 sind in erfindungsgemäßer Art und Weise mehrere Durchführungen 5 vorgesehen, die die Naht 3 des Kraftstoffbehälters so durchsetzen, dass diese eine Schnittstelle des Kraftstoffbehälters 1 bilden. Die Durchführungen 5 sind in einer als Einlegeteil ausgebildeten Multifunktionskupplung 6 angeordnet. Diese Multifunktionskupplung 6 besitzt einen Grundkörper 7 aus thermoplastischem Kunststoff, der bei dem dargestellten Ausführungsbeispiel insgesamt drei Durchführungen 5 und einen elektrischen Steckkontakt 8 aufweist. Es ist für den Fachmann ersichtlich, dass die Multifunktionskupplung 6 eine beliebige Anzahl von elektrischen Steckkontakten 8 bzw. Durchführungen 5 aufweisen kann und dass die Anzahl und Anordnung der Durchführungen 5 sowie elektrischen Steckkontakte 8 einer gewissen Beliebigkeit unterliegt.

Wie eingangs bereits erwähnt, ist die Multifunktionskupplung 6 als Einlegeteil in die Naht 3 des Kraftstoffbehälters 1 eingefügt und mit der Wandung 9 des Kunststoffbehälters in diesem Bereich verschweißt. Der Grundkörper 7 kann beispielsweise aus Polyethylen oder einem anderen mit der Wandung 9 des Kraftstoffbehälters 1 verschweißbaren Kunststoff bestehen.

Alternativ kann der Grundkörper 7 der Multifunktionskupplung 6 aus mehreren Kunststoffkomponenten zusammengesetzt sein, wobei vorzugsweise die äußere Umfassung des Grundkörpers 7 aus einem mit der Wandung 9 des Kraftstoffbehälters 1 verschweißbaren Kunststoff besteht, wohingegen der übrige Grundkörper 7 im Bereich der Durchführungen 5 oder im Bereich des elektrischen Steckkontakts aus einem in Anwesenheit von Kraftstoffen nicht quellendem Kunststoff bestehen kann, beispielsweise POM (Polyoxymethylen).

Wie insbesondere aus den Figuren ersichtlich ist, erstrecken sich die Durchführungen 5 sowie der elektrische Steckkontakt 8 quer zum Verlauf der Naht 3 und in der Trennebene der Halbschalen 4a, 4b.

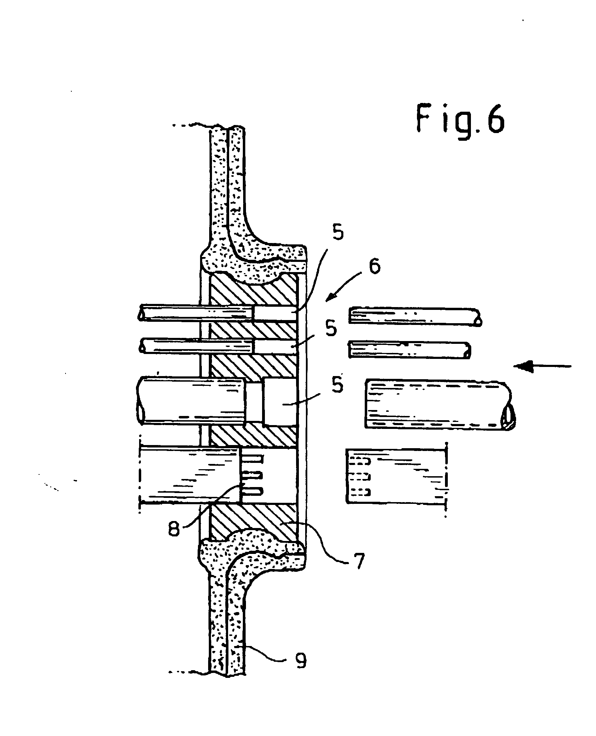

Wie der Figur 6 zu entnehmen ist, können die Durchführungen 5 so ausgebildet sein, dass diese von Belüftungs- und Entlüftungsleitungen vollständig durchsetzt werden. Die Durchführungen können allerdings auch so ausgebildet sein, dass diese Kupplungsfortsätze für anzuschließende Leitungen bilden, beispielsweise mit einem Tannenbaumprofil zum Aufwürgen von flexiblen Leitungen.

### Bezugszeichenliste

- 1: Kraftstoffbehälter
- 2: Ränder
- 3 ·: Naht
- 4a, 4b: Halbschalen
- 5: Durchführungen
- 6: Multifunktionskupplung
- 7: Grundkörper
- 8: elektrischer Steckkontakt
- 9: Wandung

## Patentansprüche

1. Kraftstoffbehälter (1) aus thermoplastischem Kunststoff mit wenigstens einer umlaufenden, als Schweiß- oder Quetschnaht ausgebildeten Naht (3), mit wenigstens einer Einfüllöffnung, mit Mitteln zur Be- und Entlüftung und mit Mitteln zur Förderung und Entnahme von Kraftstoff zu einer Brennkraftmaschine eines Kfz, wobei der Kraftstoffbehälter (1) wenigstens eine Durchführung (5) für aus diesem herauszuführende Leitungen aufweist, wobei die Durchführung (5) die Naht (3) des Behälters durchsetzt und sich in einem Winkel zum Verlauf der Naht (3) erstreckt, **dadurch gekennzeichnet, dass** die Durchführung (5) innerhalb eines die Naht (3) durchsetzenden Einlegeteils oder Einsatzes ausgebildet ist.

2. Kraftstoffbehälter nach Anspruch 1, **dadurch gekennzeichnet, dass** die Wandung (9) des Behälters aus einem mehrschichtigen Extrudat mit wenigstens einer Barriereschicht für Kohlenwasserstoffe besteht.

3. Kraftstoffbehälter nach einem der Ansprüche 1 oder 2, **dadurch gekennzeichnet, dass** dieser wenigstens aus zwei Schalen zusammengesetzt ist, die jeweils im Bereich der Naht (3) einen flanschartigen Rand (2) ausbilden.

4. Kraftstoffbehälter nach einem der Ansprüche 1 bis 3, **dadurch gekennzeichnet, dass** sich die Durchführung (5) quer zum Verlauf der Naht (3) und in der Trennebene der Schalen erstreckt.

5. Kraftstoffbehälter nach Anspruch 1, **dadurch gekennzeichnet, dass** das Einlegeteil zumindest teilweise aus Kunststoff besteht und mit dem Kunststoff des Behälters in der Naht (3) verschweißt ist.

6. Kraftstoffbehälter nach einem der Ansprüche 1 bis 5, **dadurch gekennzeichnet, dass** das Einlegeteil als Steckverbinder ausgebildet ist.

## Claims

1. A fuel tank (1) of a thermoplastic plastics material having at least one circumferential seam (3) constructed as a weld seam or crimp seam, having at least one fill opening, having means for aeration and deaeration and having means for conveying and removing fuel to and from an internal combustion engine of a motor vehicle, wherein the fuel tank (1) has at least one leadthrough (5) for conduits which are intended to lead out of said leadthrough, wherein the leadthrough (5) passes through the seam (3) of the tank and extends at an angle to the course of the seam (3), **characterised in that** the leadthrough (5) is constructed within an insert or inlay passing through the seam (3).

2. A fuel tank according to Claim 1, **characterised in that** the wall (9) of the tank is made of a multilayer extrudate with at least one barrier layer for hydrocarbons.

3. A fuel tank according to one of Claims 1 or 2, **characterised in that** this is composed of at least two shells which each form a flange-like edge (2) in the region of the seam (3).

4. A fuel tank according to one of Claims 1 to 3, **characterised in that** the leadthrough (5) extends transversely to the course of the seam (3) and in the parting plane of the shells.

5. A fuel tank according to Claim 1, **characterised in that** the insert is made at least partially of plastics material and is welded to the plastics material of the tank in the seam (3).

6. A fuel tank according to one of Claims 1 to 5, **characterised in that** the insert is constructed as a plug-type connector.

## Revendications

1. Réservoir de carburant (1) en matière plastique thermoplastique avec au moins une ligne de joint (3) périphérique, réalisée sous forme de joint de soudure ou de joint écrasé, avec au moins une ouverture de remplissage, avec des moyens d'admission d'air et de purge d'air et avec des moyens pour transporter et prélever le carburant vers un moteur à combustion interne d'un véhicule à moteur, ledit réservoir de carburant (1) comportant au moins un passage (5) pour des conduites à guider hors de celui-ci, ledit passage (5) traversant la ligne de joint (3) du réservoir et s'étendant en formant un angle avec le tracé de la ligne de joint (3), **caractérisé en ce que** le passage (5) est réalisé à l'intérieur d'une pièce d'insertion ou insert traversant la ligne de joint (3).

2. Réservoir de carburant selon la revendication 1, **caractérisé en ce que** la paroi (9) du réservoir est réalisée à partir d'un produit extrudé multicouche avec au moins une couche barrière pour les hydrocarbures.

3. Réservoir de carburant selon la revendication 1 ou 2, **caractérisé en ce que** celui-ci est constitué d'au moins deux coques, qui forment chacune un bord (2) en forme de collet dans la zone de la ligne de joint (3).

4. Réservoir de carburant selon l'une quelconque des revendications 1 à 3, **caractérisé en ce que** le passage (5) s'étend transversalement au tracé de la ligne de joint (3) et dans le plan de séparation des coques.

5. Réservoir de carburant selon la revendication 1, **caractérisé en ce que** la pièce d'insertion est réalisée au moins partiellement en matière plastique et est soudée à la matière plastique du réservoir dans la ligne de joint (3).

6. Réservoir de carburant selon l'une quelconque des revendications 1 à 5, **caractérisé en ce que** la pièce d'insertion est réalisée sous la forme d'un connecteur à fiches.
